# EUROPEAN PATENT SPECIFICATION

(11) **EP 4 357 951 B1**
(45) Date of publication and mention of the grant of the patent: **28.01.2026**
(21) Application number: 23202700.3
(22) Date of filing: 10.10.2023
(51) Int. Cl.: G06F 21/55

(54) **METHOD AND SYSTEM FOR COMPUTATIONAL STORAGE ATTACK REDUCTION**
VERFAHREN UND SYSTEM ZUR REDUZIERUNG VON COMPUTERSPEICHERANGRIFFEN
PROCÉDÉ ET SYSTÈME DE RÉDUCTION D'ATTAQUE DE STOCKAGE INFORMATIQUE

(30) Priority: 19.10.2022 US 202263417536 P; 14.12.2022 US 202218081317
(43) Date of publication of application: 24.04.2024
(73) Proprietor: Samsung Electronics Co., Ltd., Suwon-si, Gyeonggi-do 16677 (KR)
(72) Inventor: HONG, Ilgu, San Jose, CA 95134 (US); CHOI, Changho, San Jose, CA 95134 (US)
(74) Representative: Kuhnen & Wacker Patent- und Rechtsanwaltsbüro PartG mbB

(56) References cited:
- CN-A- 103 391 546
- LUKKEN CORNE ET AL: "Past, Present and Future of Computational Storage: A Survey", ARXIV (CORNELL UNIVERSITY), 13 December 2021 (2021-12-13), Ithaca, pages 1 - 32, XP093130193, Retrieved from the Internet <URL:https://arxiv.org/pdf/2112.09691.pdf> [retrieved on 20240212], DOI: 10.48550/arxiv.2112.09691

## Description

### TECHNICAL AREA

The present disclosure relates generally to computational storage (CS) attack prevention, and more particularly, to a method and system capable of identifying an attacker, registering an attacker to a CS device (CSD) system, preventing CS operations from an attacker, stopping CS application of an attacker, and/or reclaiming CS resources from an attacker.

### BACKGROUND

A CSD provides computation functions and data storage, allowing host central processing unit (CPU) overhead to be offloaded to the CSD. More specifically, a host device may store data at and offload computations to a CSD. In some implementations, various programs may be executed at the CSD. However, introduction of executable programs to the CSD may present an increased security risk to components of the CSD.

The above information disclosed in this background section is only for enhancement of understanding of the background of the disclosure and therefore it may contain information that does not constitute prior art.

CN 103 391 546 A provides a wireless attack detection and defense device. The device is applied to a wireless access controller (AC) which is applied to management of wireless access points (APs). The device comprises a report receiving unit, a source determining unit and a dynamic operation unit. The report receiving unit is used for receiving attack reports reported by the wireless APs, reporting and determining source MAC addresses of attackers in the reports. The source determining unit is used for determining whether the APs corresponding to the source MAC addresses of the attackers are wireless APs associated with legal clients. The dynamic operation unit is used for sending the source MAC addresses used by the attackers to dynamic blacklists of the wireless APs which send the attack reports when the wireless APs corresponding to the source MAC addresses of the attackers are not wireless APs associated with legal clients. By means of the wireless attack detection and defense device, whether legal clients or counterfeiting persons send the attacks can be recognized, and corresponding defensive measures can be adopted, so that legal clients can be prevented from being accidentally injured.

Lukken Corne ET AL: "Past, Present and Future of Computational Storage: A Survey", arXiv (Cornell University), 13 December 2021 (2021-12-13), pages 1-32, XP093130193 relates to computational storage.

### SUMMARY

Embodiments of the disclosure are set out in the appended claims.

Embodiments of the disclosure provide operations for setting up an attack prevention threshold (APT) value that may be used to determine a malicious attack.

Embodiments of the disclosure provide operations for identifying an attack using an APT value.

Embodiments of the disclosure provide operations for setting up a black list and to filter out attacker using the black list.

Embodiments of the disclosure provide operations to track an attack based on a user.

Embodiments of the disclosure provide operations for filtering out a CS request from an attacker in an early stage.

Embodiments of the disclosure provide operations for stopping/killing CS applications belonging to an attacker.

Embodiments of the disclosure provide operations for reclaiming resources belonging to an attacker.

According to an embodiment, a method of a CSD is provided, which includes receiving, from a user device, a CS request, identifying the CS request as an attack, comparing a total attack value of the user device to a threshold, wherein the total attack value is based on a number of attacks received from the user device, and identifying the user device as an attacker based on the comparison.

According to an embodiment, a CSD is provided, which includes a memory and a processor configured to receive, from a user device, a CS request, identify the CS request as an attack, compare a total attack value of the user device to a threshold, wherein the total attack value is based on a number of attacks received from the user device, and identify the user device as an attacker based on the comparison.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
FIG. 1 illustrates a CS system, according to an embodiment;
FIG. 2 illustrates performance degradation from an attack even though CSD provides attack protection mechanism, according to an embodiment;
FIG. 3 illustrates an interface to set an attack prevention threshold value and black list, according to an embodiment;
FIG. 3A illustrates an example of a user data structure for use in logging attacks of a user, according to an embodiment;
FIG. 4 illustrates procedure for attack logging and detecting attacker, according to an embodiment;
FIG. 5 is a flowchart illustrating a procedure for logging an attack and detecting an attacker in a CSD, according to an embodiment;
FIG. 6 illustrates a procedure for filtering out an attacker, according to an embodiment;
FIG. 7 is a flowchart illustrating a procedure for filtering out an attacker, according to an embodiment;
FIG. 8 illustrates a procedure for stopping CS applications of an attacker and reclaiming CS resources from the attacker, according to an embodiment;
FIG. 9 illustrates an example of CSD architecture for attack prevention with a black list, according to an embodiment; and
FIG. 10 illustrates a block diagram of an electronic device in a network environment, according to an embodiment.

### DETAILED DESCRIPTION

Hereinafter, various embodiments of the disclosure are described in detail with reference to the accompanying drawings. The same elements may be designated by the same or similar reference numerals although they are shown in different drawings.

In the following description, specific details such as detailed configurations and components are merely provided to assist with the overall understanding of the embodiments of the present disclosure. Therefore, it should be apparent to those skilled in the art that various changes and modifications of the embodiments described herein may be made without departing from the scope of the present disclosure.

In addition, descriptions of well-known functions and constructions are omitted for clarity and conciseness.

The terms described below are terms defined in consideration of the functions in the present disclosure, and may be different according to users, intentions of the users, or customs. Therefore, the definitions of the terms should be determined based on the contents throughout this specification.

The present disclosure may have various modifications and various embodiments, among which embodiments are described below in detail with reference to the accompanying drawings. However, it should be understood that the present disclosure is not limited to the embodiments, but includes all modifications, equivalents, and alternatives within the scope of the present disclosure.

Although the terms including an ordinal number such as first, second, etc. may be used for describing various elements, the structural elements are not restricted by the terms. The terms are only used to distinguish one element from another element. For example, without departing from the scope of the present disclosure, a first structural element may be referred to as a second structural element. Similarly, the second structural element may also be referred to as the first structural element. As used herein, the term "and/or" includes any and all combinations of one or more associated items. Additionally, singular forms are intended to include plural forms unless the context clearly indicates otherwise.

As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, terms such as "1^{st}," "2nd," "first," and "second" may be used to distinguish a corresponding component from another component, but are not intended to limit the components in other aspects (*e.g.*, importance or order).

If an element (*e.g.,* a first element) is referred to, with or without the term "operatively" or "communicatively", as "coupled with," "coupled to," "connected with," or "connected to" another element (*e.g.,* a second element), it indicates that the element may be coupled with the other element directly (*e.g.*, wired), wirelessly, or via a third element.

The terms used herein are merely used to describe various embodiments of the present disclosure but are not intended to limit the present disclosure. In the present disclosure, the terms "include" or "have" indicate existence of a feature, a number, a step, an operation, a structural element, parts, or a combination thereof, and do not exclude the existence or probability of the addition of one or more other features, numerals, steps, operations, structural elements, parts, or combinations thereof.

Unless defined differently, all terms used herein have the same meanings as those understood by a person skilled in the art to which the present disclosure belongs. Terms such as those defined in a generally used dictionary are to be interpreted to have the same meanings as the contextual meanings in the relevant field of art, and are not to be interpreted to have ideal or excessively formal meanings unless clearly defined in the present disclosure.

An electronic device, according to an embodiment, may be one of various types of electronic devices utilizing storage devices. The electronic device may use any suitable storage standard, such as, e.g., peripheral component interconnect express (PCIe), nonvolatile memory express (NVMe), NVMe-over-fabric (NVMeoF), advanced extensible interface (AXI), ultra path interconnect (UPI), ethernet, transmission control protocol/Internet protocol (TCP/IP), remote direct memory access (RDMA), RDMA over converged ethernet (ROCE), fibre channel (FC), infiniband (IB), serial advanced technology attachment (SATA), small computer systems interface (SCSI), serial attached SCSI (SAS), Internet wide-area RDMA protocol (iWARP), etc., or any combination thereof. In some embodiments, an interconnect interface may be implemented with one or more memory semantic and/or memory coherent interfaces and/or protocols including one or more compute express link (CXL) protocols such as CXL.mem, CXL.io, and/or CXL.cache, Gen-Z, coherent accelerator processor interface (CAPI), cache coherent interconnect for accelerators (CCIX), etc., or any combination thereof. Any of the memory devices may be implemented with one or more of any type of memory device interface including double data rate (DDR), DDR2, DDR3, DDR4, DDR5, low-power DDR (LPDDRX), open memory interface (OMI), NVlink high bandwidth memory (HBM), HBM2, HBM3, and/or the like. The electronic devices may include, e.g., a portable communication device (*e.g.,* a smart phone), a computer, a portable multimedia device, a portable medical device, a camera, a wearable device, or a home appliance. However, an electronic device is not limited to those described above.

As used herein, the term "module" may include a unit implemented in hardware, software, firmware, or combination thereof, and may interchangeably be used with other terms, for example, "logic," "logic block," "part," and "circuitry." A module may be a single integral component, or a minimum unit or part thereof, adapted to perform one or more functions. For example, according to one embodiment, a module may be implemented in a form of an application-specific integrated circuit (ASIC), a co-processor, or field programmable gate arrays (FPGAs).

As used herein, a CSD refers to a storage device that supports computational tasks. For example, a CSD may include a storage element (e.g., non-volatile memory, such as flash memory, a hard disk drive, etc.) and a compute element (e.g., a CPU, graphics processor unit (GPU), an FPGA, an ASIC (such as a tensor processing unit), a processor core, etc.) and be configured to support storage of data at the storage element and execution of computational tasks at the compute element. Accordingly, a CSD may provide storage capabilities to a CS client (e.g., a computing device) and may support offloading of computational tasks from the CS client to the CSD.

A malicious attacker may torment a CSD by continuously issuing CS requests to attack the system.

To address this type of problem, various embodiments of the disclosure provide operations for identifying an attacker, registering an attacker to the CSD, preventing CS operations as early as possible from an attacker, stopping CS application of an attacker, and reclaiming CS resources from an attacker.

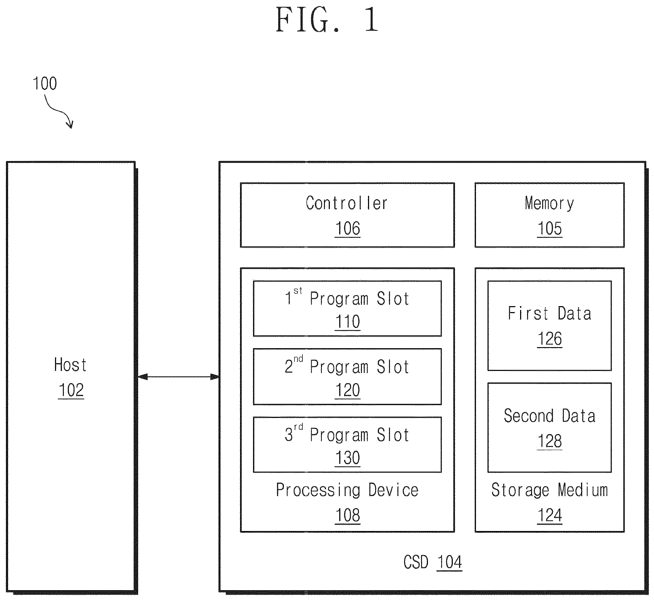

FIG. 1 illustrates a CS system, according to an embodiment.

Referring to FIG. 1, the CS system 100 includes a host 102 and a CSD 104. Although one host and one CSD is illustrated in FIG. 1, the CS system 100 may include multiple hosts and/or multiple CSDs.

The CSD 104 includes a controller 106, a processing device 108, a memory 105, and a storage medium 124. The controller 106 may include an ASIC, an FPGA, a CPU, or other processing unit configured to process input and output operations associated with the storage medium 124. For example, in response to a write command from the host 102, the controller 106 may read data from the host 102 and write the data into the storage medium 124. As another example, in response to a read command from the host 102, the controller 106 may read data from the storage medium 124 and write the data to the host 102. In addition to processing input and output operations, the controller 106 may process commands associated with computational tasks. These commands associated with computational tasks may include commands to load programs into the processing device 108, commands to set one or more permissions associated with such programs, or a combination thereof.

The storage medium 124 may include a non-volatile computer-readable storage medium, a volatile computer-readable storage medium, or a combination thereof. In the example of FIG. 1, the storage medium 124 stores first data 126 and second data 128. The first data 126 and the second data 128 may correspond to namespaces, files, pages, logical block address ranges, other units of data, or a combination thereof. While the storage medium 124 is illustrated with two units of data, it should be noted that the storage medium 124 may include different numbers of data units.

The memory 105 may include a volatile computer-readable storage medium, a non-volatile computer readable storage medium, or a combination thereof. The memory 105 may be configured to operate as an operational memory and to store program data for programs executing at the processing device 108. In some implementations, the memory 105 and the storage medium 124 may be distinguished by how data units are addressed in the respective devices. For example, the memory 105 may be byte addressable whereas the storage medium 124 may be block addressable. In some implementations, the computational storage device 104 may include a single computer readable storage medium for long term storage as well as for use as operational memory.

The processing device 108 may include an ASIC, FPGA, a CPU, a GPU, other type of processor unit, or a combination thereof. The processing device 108 may be configured to execute applications loaded from program slots, which are spaces configured to store programs. Although the processing device 108 in FIG. 1 is illustrated with a first program slot 110, a second program slot 120, and a third program slot 130, other numbers of program slots are possible. The number of program slots included in the processing device 108 may be configurable or may be based on some underlying hardware feature of the processing device 108. For example, the number of program slots may be based on a number of cores included in the processing device 108 or another hardware feature. In some implementations, each program slot corresponds to a memory address or range in a memory, such as the memory 105, and loading an application into the program slot includes storing the application (or a reference, such as a pointer, to the application) in the corresponding address or range for execution by the processing device 108.

The program slots 110, 120, and 130 may correspond to logical representations of capacity of the processing device 108 and the processing device 108 may execute a number of programs up to the number of program slots. These logical representations may be maintained by the controller 106. Metadata corresponding to each program slots 110, 120, and 130 may be stored, by the controller 106, in the memory 105, in the storage medium 124, or a combination thereof. The metadata corresponding to the program slots 110, 120, and 130 may indicate a slot identifier, a program reserved to the slot, one or more permissions associated with the slot, or a combination thereof. The one or more permissions associated with the slot may identify entities (e.g., hosts, programs, etc.) authorized to load a program into the slot, to execute a program in the slot, or a combination thereof.

The CSD 104 may include various additional components, such as a host interface layer, a flash translation layer, etc. For example, a host interface layer may be configured to translate commands received from the host 102 to a form recognized by the controller 106. Such translation may include translating an addressing scheme used by the host 102 to an addressing scheme used by the controller 106. The flash translation layer may translate commands from the controller 106 to a format recognized by the storage medium 124. Such translation may include translating an addressing scheme used by the host 102 to an addressing scheme used by the storage medium 124.

Additionally, more than one of the components shown may be included in the CSD 104. For example, the CSD 104 may include more than one memory 105, more than one storage medium 124, more than one processing device 108, more than one controller 106, etc.

Further, the CSD 104 may include various connections between components. For example, components of the CSD 104 may be connected by a bus, by one or more direct connections, or a combination thereof.

In addition, some components illustrated in FIG. 1 may be combined. For example, the controller 106 and the processing device 108 may be implemented with the same processing device (or processing devices).

In operation, the controller 106 manages rights associated with the program slots 110, 120, and 130 and rights associated with programs. For example, the controller 106 may enforce a reservation of a program slot to an application and may prevent unauthorized programs from being loaded into the program slot. As another example, the controller 106 may manage access rights of a program to the storage medium 124, to the memory 105, or a combination thereof. As another example, the controller 106 may manage access rights of various entities (e.g., users, hosts, programs, etc.) to load and/or execute a program in one of the program slots 110, 120, and 130. Thus, the controller 106 may prevent unauthorized use of various resources of the computational storage device 104. Prevention of such unauthorized uses may be useful in various contexts such as multi-tenant environments in which programs from different vendors are loaded into program slots 110, 120, and 130. Additionally, the controller 106 may manage rights associated with one program loading a program into one of the program slots 110, 120, and 130 and initiating execution. Accordingly, the CSD 104 may support relatively complex work flows while maintaining security. An example of one such complex workflow is one in which a checksum program selectively loads and executes a repair program. In some implementations, the controller 106 operates according to an NVMe protocol.

While the CSD 104 is described as a physical device, the CSD 104 and/or one or more components thereof may correspond to virtual devices provided by one or more underlying physical devices. For example, a hypervisor executing in a computing system may provide the CSD 104 to the host 102. The host 102 may likewise correspond to a physical or a virtual computing device.

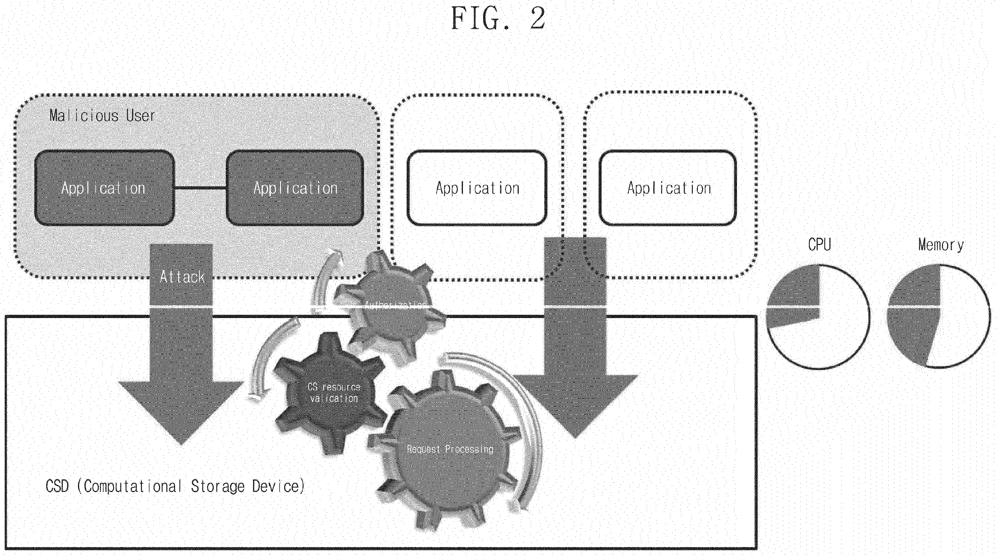

FIG. 2 illustrates an example of performance degradation from an attack even though a CSD provides attack protection mechanism, according to an embodiment.

Referring to FIG. 2, a malicious attacker torments a CSD by continuously issuing CS requests to attack the system.

To address this type of problem, various embodiments of the disclosure provide operations for identifying an attacker, registering an attacker to the CSD, preventing CS operations as early as possible from an attacker, stopping CS application of an attacker, and reclaiming CS resources from an attacker.

### Attack Prevention Threshold and Black list

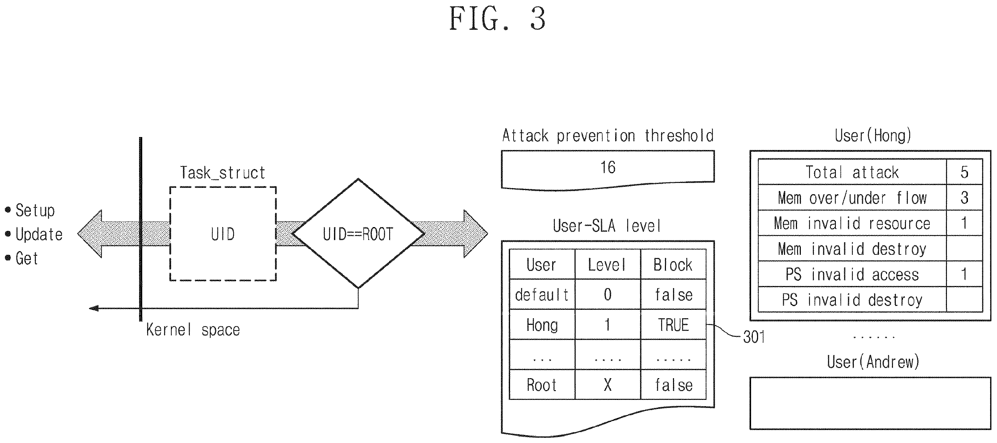

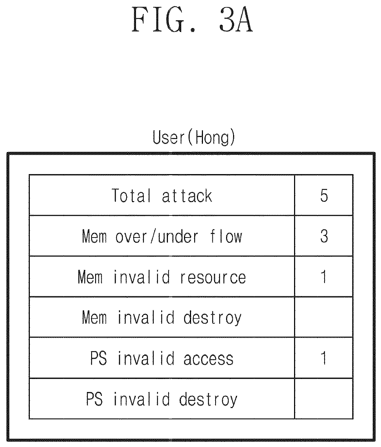

FIG. 3 illustrates an interface for an APT and a mapping table, according to an embodiment.

Referring to FIG. 3, an APT defines a value, e.g., 16, which is used to determine an attacker.

A CSD may keep track of CS resource attacks and log a count of the attacks in a user data structure. For example, a user data structure may be a global structure that is generated for each user (user device) with a user identifier (UID).

FIG. 3A illustrates an example of a user data structure for use in logging attacks of a user, according to an embodiment.

Referring to FIG. 3A, the CSD may count instance of a memory over/under flow, a memory invalid resource, memory invalid destroy, program slot (PS) invalid access, and PS invalid destroy. However, these type of attacks are merely examples, and the disclosure is not limited thereto.

When count of the attacks of the user, i.e., total attack, reaches an APT, the CSD may determine the user as an attacker and also mark an entry 301 for the user in a service level agreement (SLA)-User mapping table as an attacker. That is, a "black list" may be created by adding a block column to an SLA-User mapping table, which may be used to designate a user on the black list as an attacker.

Although FIGs. 3 and 3A illustrate an APT threshold based on a total number of attacks, the disclosure is not limited thereto. For example, the APT may be a total score, wherein each type of an attack may have a different weight, such that a type of attack that is more problematic may have a higher score for each instance, and/or a type of attack that is less problematic may have a lower score for each instance.

In accordance with an embodiment of the disclosure, a root user (or administrator) may directly set a black list through an SLA-User mapping table update. In this case, the CSD will search the user data structure with a UID and also mark it as an attacker.

To protect access to the APT and the SLA-User mapping table from an unprivileged user, the CSD checks whether a process context belongs to a root (admin) or not, and only allows access by the root (admin).

### Attack Logging and Detecting Attacker

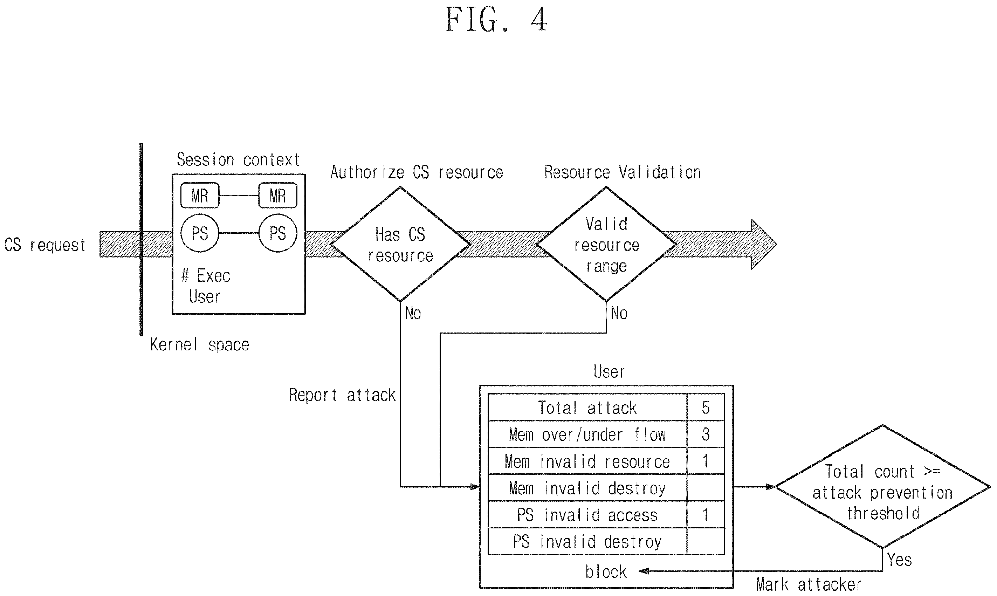

FIG. 4 illustrates a procedure for attack logging and detecting attacker, according to an embodiment.

Referring to FIG. 4, in response to a CS request, the CSD performs a series of checks in order to protect CS resources. First, the CSD checks CS resource authorization. That is, the CSD determines whether a CS resource that is requested is owned by the CS application.

Next, the CSD checks resource validation to validate that a request has a valid range of CS resources, e.g., to detect an over/under flow attack. When CSD detects an attack, it updates the attack log in the user data structure by sending an attack report.

Thereafter, the CSD checks whether a total attack count reaches to the APT. If so, the user will be marked as an attacker in the user data structure and the SLA-User mapping table.

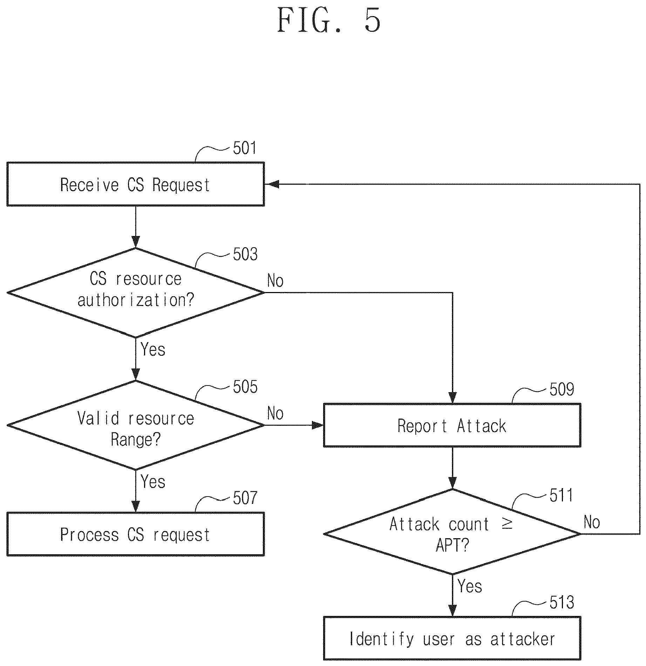

FIG. 5 is a flow chart illustrating a procedure for logging an attack and detecting an attacker in a CSD, according to an embodiment.

Referring to FIG. 5, in step 501, the CSD receives a CS request from a user.

In step 503, the CSD checks CS resource authorization. For example, the CSD may determine whether a CS resource that is requested is owned by the CS application.

In step 505, in response to the CS resource being authorized in step 503, the CSD performs resource validation. For example, the CSD may perform resource validation in order to validate that the CS request has a valid range of CS resources, e.g., to detect an over/under flow attack.

In step 507, in response to determining that the CS request has a valid range of CS resources in step 505, the CSD processes the CS request.

However, if the CS resource is not authorized in step 503 or if it is determined that the CS request does not have a valid range of CS resources in step 505, the CSD identifies the CS request as an attack and reports the attack in step 509. As described above, the CSD may keep track of CS resource attacks and log a count of the attacks in a user data structure.

In step 511, the CSD determines whether the attack count for the user is greater than or equal to an APT.

When it is determined that the attack count for the user is greater than or equal to an APT in step 511, the CSD identifies the user as an attacker in step 513. As described above, when the CSD identifies the user as an attacker, it may mark an entry for the user in an SLA-User mapping table as an attacker. For example, as illustrated in FIG. 3, the CSD may mark an entry 301 for the user in a SLA-User mapping table as "TRUE" in order to designate the user as an attacker.

When it is determined that the attack count for the user is not greater than or equal to an APT in step 511, the process returns to step 501, and the CSD may receive a new CS request.

### Filter Out Attacker

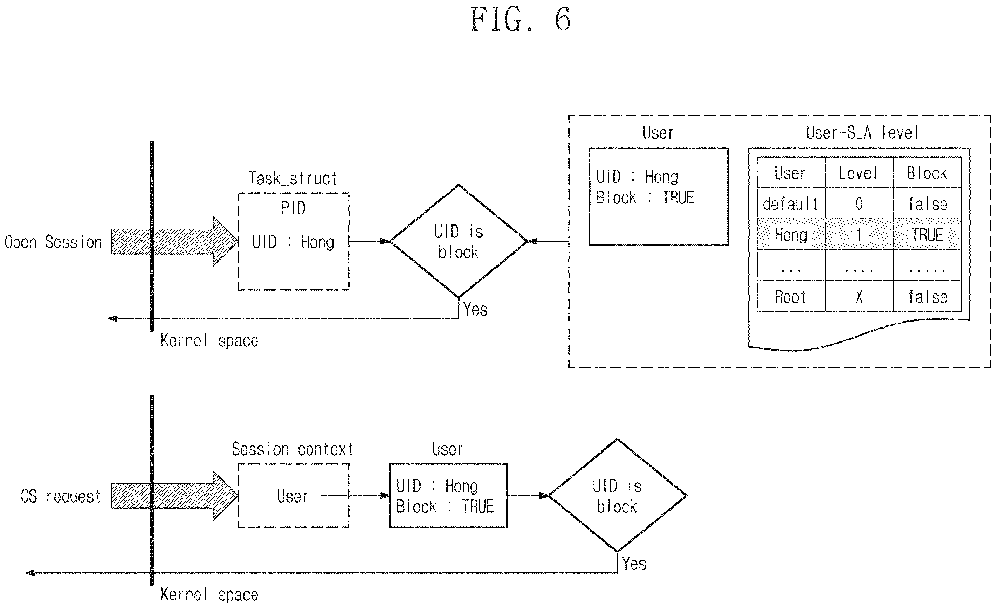

FIG. 6 illustrates a procedure for filtering out an attacker, according to an embodiment.

Referring to FIG. 6, for a CS request from an attacker, the CSD may filter out the attacker as early as possible.

For example, when an attacker issues an open session to use a CSD service, the CSD may extract a UID from a process context (task_struct) and check whether it is an attacker or not. For example, the CSD may compare the extracted UID to an entry for the user in an SLA-User mapping table.

When the UID is identified as an attacker, the CSD may then block the user and return a CS request failure indication.

Additionally, after the CSD identifies a user as an attacker while processing CS requests, any CS request received after that point may be blocked and a failure indication may be quickly replied.

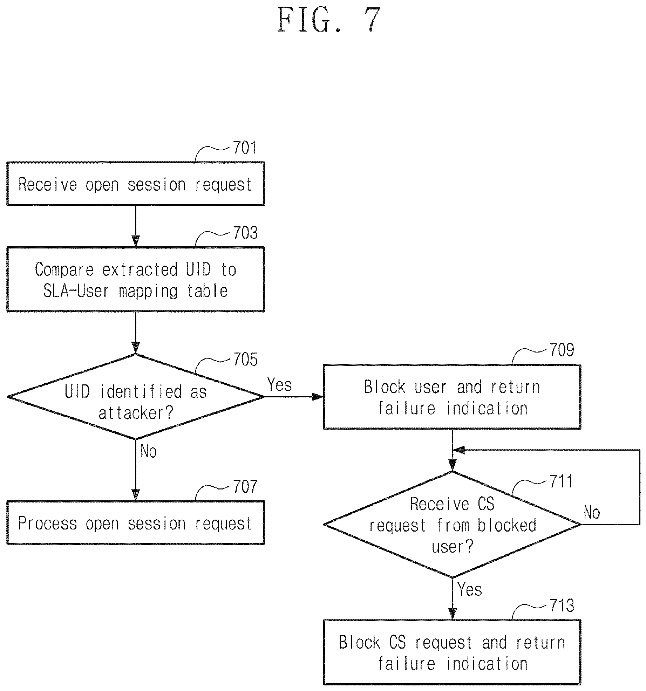

FIG. 7 is a flow chart illustrating a procedure for filtering out an attacker, according to an embodiment.

Referring to FIG. 7, in step 701, the CSD receives, from a user, an open session request to use a CSD service.

In step 703, the CSD extracts a UID from a process context (task_struct) and compares the extracted UID to an entry for the user in an SLA-User mapping table.

In step 705, based on the entry for the user in the SLA-User mapping table, the CSD determines whether the UID is identified as an attacker.

In step 707, in response to determining that the UID is not identified as an attacker in step 705, the CSD processes the open session request.

However, in response to determining that the UID is identified as an attacker in step 705, the CSD blocks the user and returns a request failure indication in step 709.

In step 711, the CSD determines whether a CS request is received from the blocked user, i.e., the attacker.

When it is determined that a CS request is received from the blocked user in step 711, the CSD blocks the received CS request and returns a failure indication in step 713.

### Stop CS Application of Attacker and Reclaim Resource

As described above, a CSD according to the disclosure may prevent a CS request from an attacker very quickly. However, the CSD still utilizes system resources and has to handle continuously issued CS requests from the attacker. To address these types of issues, in accordance with an embodiment of the disclosure, the CSD may also perform operations to stop CS applications of an attacker and reclaim resources from the attacker.

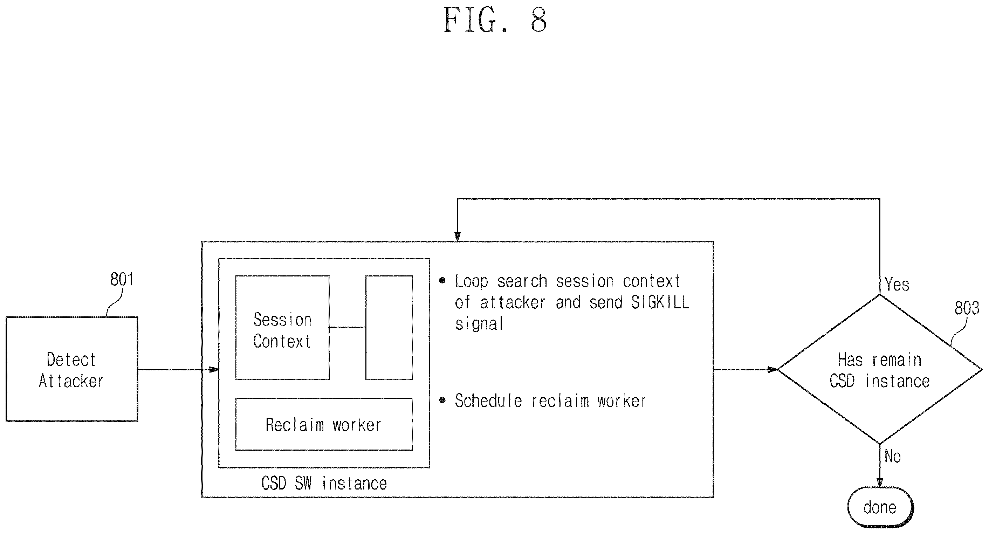

FIG. 8 illustrates a procedure for stopping CS applications of an attacker and reclaiming CS resources from the attacker, according to an embodiment.

Referring to FIG. 8, when the CSD detects an attacker at 801, it may schedule a worker, which will loop each CSD instance and search session contexts belonging to the attacker, and then send a SIGKILL message to any CS applications belonging to the attacker. The CSD may schedule a reclaim worker for that CSD instance. The reclaim worker will release CS resources of the dead/killed CS application. This procedure may continue at 803 for all CSD instances, and therefore, stop/kill all CS applications belonging to an attacker and reclaim all CS resources from the attacker.

### Overview Architecture

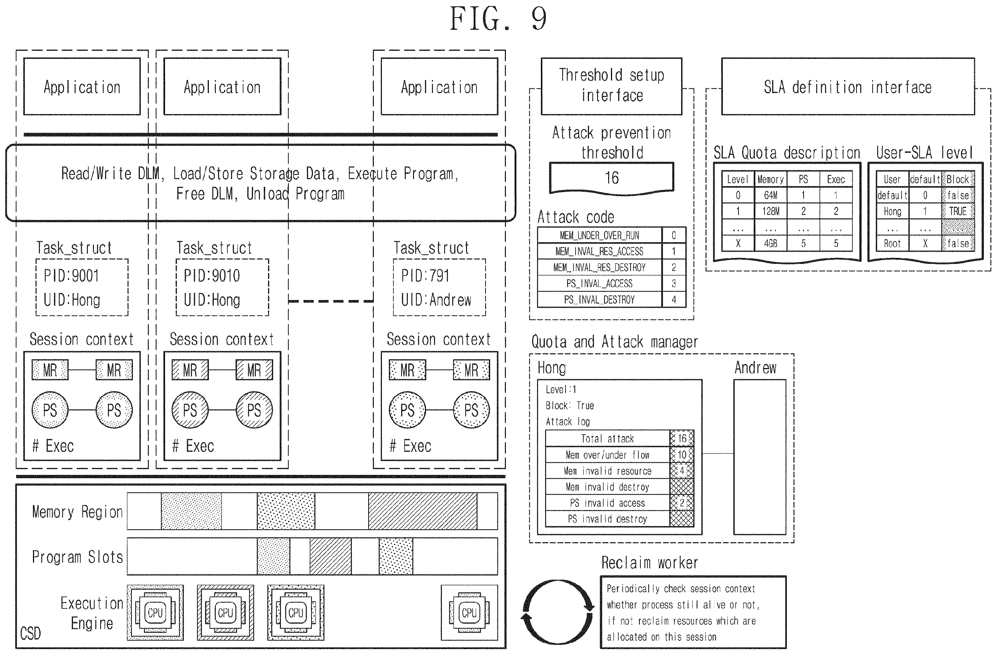

FIG. 9 illustrates an example of CSD architecture for attack prevention with a black list, according to an embodiment.

Referring to FIG. 9, CS resources of an application are isolated by process identifier (PID) and managed with session context, and a CS resource attack is tracked for a user (i.e., per user data structure).

During system initialization for CSDs, a root (admin) may set an APT value and a black list to the SLA-User mapping table. The system may the perform the CS resource authorization and validation for the CS request and update the attack log in the user data structure. When the attack count reaches the APT value, the system will mark the user as an attacker in the user data structure and the SLA-User mapping table. Thereafter, CS operations from the attacker will be blocked.

For more aggressive prevention, the system may also stop a CS application of an attacker by sending a SIGKILL message and scheduling a reclaim worker to release CS resources from the attacker.

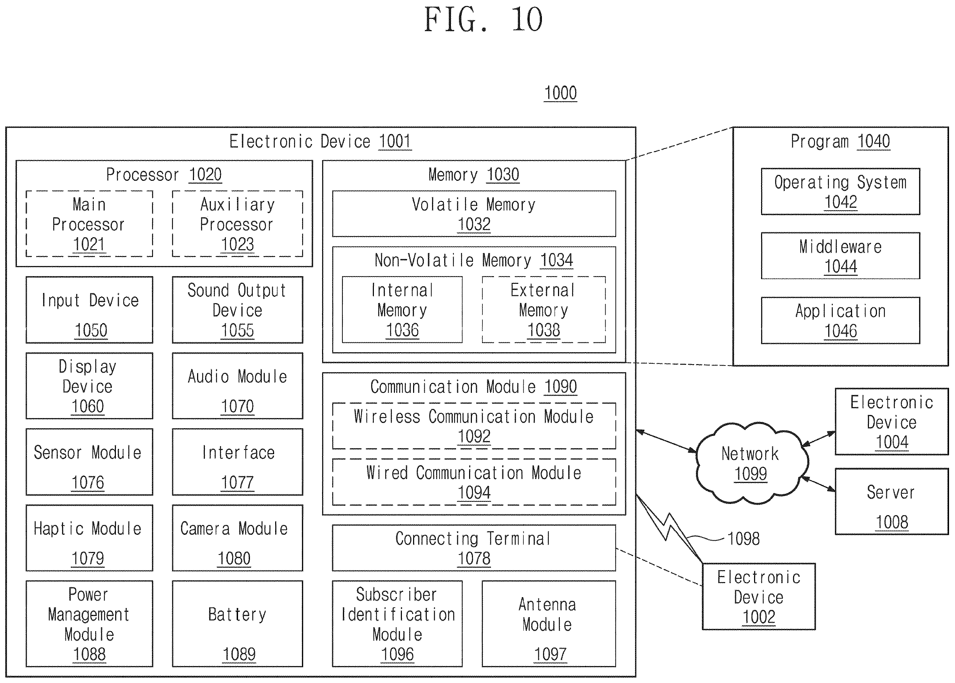

FIG. 10 illustrates an electronic device in a network environment, according to an embodiment.

Referring to FIG. 10, the electronic device 1001, e.g., a mobile terminal including GPS functionality, in the network environment 1000 may communicate with an electronic device 1002 via a first network 1098 (e.g., a short-range wireless communication network), or an electronic device 1004 or a server 1008 via a second network 1099 (e.g., a long-range wireless communication network). The electronic device 1001 may communicate with the electronic device 1004 via the server 1008. The electronic device 1001 may include a processor 1020, a memory 1030, an input device 1050, a sound output device 1055, a display device 1060, an audio module 1070, a sensor module 1076, an interface 1077, a haptic module 1079, a camera module 1080, a power management module 1088, a battery 1089, a communication module 1090, a subscriber identification module (SIM) 1096, or an antenna module 1097 including a global navigation satellite system (GNSS) antenna. In one embodiment, at least one (e.g., the display device 1060 or the camera module 1080) of the components may be omitted from the electronic device 1001, or one or more other components may be added to the electronic device 1001. In one embodiment, some of the components may be implemented as a single integrated circuit (IC). For example, the sensor module 1076 (e.g., a fingerprint sensor, an iris sensor, or an illuminance sensor) may be embedded in the display device 1060 (e.g., a display).

The processor 1020 may execute, for example, software (e.g., a program 1040) to control at least one other component (e.g., a hardware or a software component) of the electronic device 1001 coupled with the processor 1020, and may perform various data processing or computations. The processor 1020 may correspond a CSD.

As at least part of the data processing or computations, the processor 1020 may load a command or data received from another component (e.g., the sensor module 1076 or the communication module 1090) in volatile memory 1032, process the command or the data stored in the volatile memory 1032, and store resulting data in non-volatile memory 1034. The processor 1020 may include a main processor 1021 (e.g., a CPU or an application processor), and an auxiliary processor 1023 (e.g., a graphics processing unit (GPU), an image signal processor (ISP), a sensor hub processor, or a communication processor (CP)) that is operable independently from, or in conjunction with, the main processor 1021. Additionally or alternatively, the auxiliary processor 1023 may be adapted to consume less power than the main processor 1021, or execute a particular function. The auxiliary processor 1023 may be implemented as being separate from, or a part of, the main processor 1021.

The auxiliary processor 1023 may control at least some of the functions or states related to at least one component (e.g., the display device 1060, the sensor module 1076, or the communication module 1090) among the components of the electronic device 1001, instead of the main processor 1021 while the main processor 1021 is in an inactive (e.g., sleep) state, or together with the main processor 1021 while the main processor 1021 is in an active state (e.g., executing an application). According to one embodiment, the auxiliary processor 1023 (e.g., an ISP or a CP) may be implemented as part of another component (e.g., the camera module 1080 or the communication module 1090) functionally related to the auxiliary processor 1023.

The memory 1030 may store various data used by at least one component (e.g., the processor 1020 or the sensor module 1076) of the electronic device 1001. The various data may include, for example, software (e.g., the program 1040) and input data or output data for a command related thereto. The memory 1030 may include the volatile memory 1032 or the non-volatile memory 1034.

The program 1040 may be stored in the memory 1030 as software, and may include, for example, an operating system (OS) 1042, middleware 1044, or an application 1046.

The input device 1050 may receive a command or data to be used by other component (e.g., the processor 1020) of the electronic device 1001, from the outside (e.g., a user) of the electronic device 1001. The input device 1050 may include, for example, a microphone, a mouse, or a keyboard.

The sound output device 1055 may output sound signals to the outside of the electronic device 1001. The sound output device 1055 may include, for example, a speaker or a receiver. The speaker may be used for general purposes, such as playing multimedia or recording, and the receiver may be used for receiving an incoming call. According to one embodiment, the receiver may be implemented as being separate from, or a part of, the speaker.

The display device 1060 may visually provide information to the outside (e.g., a user) of the electronic device 1001. The display device 1060 may include, for example, a display, a hologram device, or a projector and control circuitry to control a corresponding one of the display, hologram device, and projector. According to one embodiment, the display device 1060 may include touch circuitry adapted to detect a touch, or sensor circuitry (e.g., a pressure sensor) adapted to measure the intensity of force incurred by the touch.

The audio module 1070 may convert a sound into an electrical signal and vice versa. According to one embodiment, the audio module 1070 may obtain the sound via the input device 1050, or output the sound via the sound output device 1055 or a headphone of an external electronic device 1002 directly (e.g., wiredly) or wirelessly coupled with the electronic device 1001.

The sensor module 1076 may detect an operational state (e.g., power or temperature) of the electronic device 1001 or an environmental state (e.g., a state of a user) external to the electronic device 1001, and then generate an electrical signal or data value corresponding to the detected state. The sensor module 1076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1077 may support one or more specified protocols to be used for the electronic device 1001 to be coupled with the external electronic device 1002 directly (e.g., wiredly) or wirelessly. According to one embodiment, the interface 1077 may include, for example, a high definition multimedia interface (HDMI) interface, a universal serial bus (USB) interface, a secure digital (SD) card interface, or an audio interface.

A connecting terminal 1078 may include a connector via which the electronic device 1001 may be physically connected with the external electronic device 1002. According to one embodiment, the connecting terminal 1078 may include, for example, an HDMI connector, a USB connector, an SD card connector, or an audio connector (e.g., a headphone connector).

The haptic module 1079 may convert an electrical signal into a mechanical stimulus (e.g., a vibration or a movement) or an electrical stimulus which may be recognized by a user via tactile sensation or kinesthetic sensation. According to one embodiment, the haptic module 1079 may include, for example, a motor, a piezoelectric element, or an electrical stimulator.

The camera module 1080 may capture a still image or moving images. According to one embodiment, the camera module 1080 may include one or more lenses, image sensors, ISPs, or flashes.

The power management module 1088 may manage power supplied to the electronic device 1001. The power management module 1088 may be implemented as at least part of, for example, a power management integrated circuit (PMIC).

The battery 1089 may supply power to at least one component of the electronic device 1001. According to one embodiment, the battery 1089 may include, for example, a primary cell which is not rechargeable, a secondary cell which is rechargeable, or a fuel cell.

The communication module 1090 may support establishing a direct (e.g., wired) communication channel or a wireless communication channel between the electronic device 1001 and the external electronic device (e.g., the electronic device 1002, the electronic device 1004, or the server 1008) and performing communication via the established communication channel. The communication module 1090 may include one or more CPs that are operable independently from the processor 1020 (e.g., the application processor) and support a direct (e.g., wired) communication or a wireless communication. According to one embodiment, the communication module 1090 may include a wireless communication module 1092 (e.g., a cellular communication module, a short-range wireless communication module, or a GNSS communication module) or a wired communication module 1094 (e.g., a local area network (LAN) communication module or a power line communication (PLC) module). A corresponding one of these communication modules may communicate with the external electronic device via the first network 1098 (e.g., a short-range communication network, such as Bluetooth^{™}, wireless-fidelity (Wi-Fi) direct, or a standard of the Infrared Data Association (IrDA)) or the second network 1099 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 1092 may identify and authenticate the electronic device 1001 in a communication network, such as the first network 1098 or the second network 1099, using subscriber information (e.g., international mobile subscriber identity (IMSI)) stored in the SIM 1096.

The antenna module 1097 may transmit or receive a signal or power to or from the outside (e.g., the external electronic device) of the electronic device 1001. According to one embodiment, the antenna module 1097 may include one or more antennas, and, therefrom, at least one antenna appropriate for a communication scheme used in the communication network, such as the first network 1098 or the second network 1099, may be selected, for example, by the communication module 1090 (e.g., the wireless communication module 1092). The signal or the power may then be transmitted or received between the communication module 1090 and the external electronic device via the selected at least one antenna.

At least some of the above-described components may be mutually coupled and communicate signals (e.g., commands or data) therebetween via an inter-peripheral communication scheme (e.g., a bus, a general purpose input and output (GPIO), a serial peripheral interface (SPI), or a mobile industry processor interface (MIPI)).

According to one embodiment, commands or data may be transmitted or received between the electronic device 1001 and the external electronic device 1004 via the server 1008 coupled with the second network 1099. Each of the electronic devices 1002 and 1004 may be a device of a same type as, or a different type, from the electronic device 1001. All or some of operations to be executed at the electronic device 1001 may be executed at one or more of the external electronic devices 1002, 1004, or 1008. For example, if the electronic device 1001 should perform a function or a service automatically, or in response to a request from a user or another device, the electronic device 1001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1001. The electronic device 1001 may provide the outcome, with or without further processing of the outcome, as at least part of a reply to the request. To that end, a cloud computing, distributed computing, or client-server computing technology may be used, for example.

One embodiment may be implemented as software (e.g., the program 1040) including one or more instructions that are stored in a storage medium (e.g., internal memory 1036 or external memory 1038) that is readable by a machine (e.g., the electronic device 1001). For example, a processor of the electronic device 1001 may invoke at least one of the one or more instructions stored in the storage medium, and execute it, with or without using one or more other components under the control of the processor. Thus, a machine may be operated to perform at least one function according to the at least one instruction invoked. The one or more instructions may include code generated by a complier or code executable by an interpreter. A machine-readable storage medium may be provided in the form of a non-transitory storage medium. The term "non-transitory" indicates that the storage medium is a tangible device, and does not include a signal (e.g., an electromagnetic wave), but this term does not differentiate between where data is semi-permanently stored in the storage medium and where the data is temporarily stored in the storage medium.

According to one embodiment, a method of the disclosure may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to one embodiment, each component (e.g., a module or a program) of the above-described components may include a single entity or multiple entities. One or more of the above-described components may be omitted, or one or more other components may be added. Alternatively or additionally, a plurality of components (e.g., modules or programs) may be integrated into a single component. In this case, the integrated component may still perform one or more functions of each of the plurality of components in the same or similar manner as they are performed by a corresponding one of the plurality of components before the integration. Operations, e.g., as illustrated in the flowcharts, performed by the module, the program, or another component may be carried out sequentially, in parallel, repeatedly, or heuristically, or one or more of the operations may be executed in a different order or omitted, or one or more other operations may be added.

Although certain embodiments of the present disclosure have been described in the detailed description of the present disclosure, the present disclosure may be modified in various forms without departing from the scope of the present disclosure as defined in the appended claims.

## Claims

1. A method of a computational storage device (104), CSD (104), the method comprising:
receiving (501), from a user device, a computational storage, CS, request;
identifying (503, 505, 509) the CS request as an attack by performing CS resource authorization in which the CSD (104) determines whether a CS resource that is requested is owned by the CS application belonging to the user device;
comparing (511) a total attack value of the user device to a threshold, wherein the total attack value is based on a number of attacks received from the user device; and
identifying (513) the user device as an attacker based on the comparison.

2. The method of claim 1, wherein identifying the CS request as the attack comprises verifying (505) that a CS resource that is requested is valid for use by a CS application.

3. The method of claim 1 or 2, further comprising logging the identified attack in a user data structure associated with the total attack value.

4. The method of any one of claims 1 to 3, wherein identifying the user device as the attacker based on the comparison comprises identifying (513) the user device as the attacker, in response to the total attack value of the user device being greater than or equal to the threshold (511).

5. The method of any one of claims 1 to 4, further comprising designating the user device as the attacker in a service level agreement, SLA-, User mapping table associated with the user device.

6. The method of claim 5, further comprising:
receiving (701) a request to start a session, from the user device, the request including a user identifier, UID, of the user device;
comparing (703) the UID of the user device to the SLA-User mapping table associated with the user device;
identifying (705) the user device as the attacker based on the designation in the SLA-User mapping table associated with the user device; and
modifying (709) access for the user device, in response to identifying the user device as the attacker.

7. The method of claim 6, further comprising:
receiving (711), from the blocked user device, another CS request; and
modifying (712) access for the another CS request and returning an indication.

8. The method of any one of claims 1 to 7, further comprising:
in response to identifying the user device as the attacker, stopping (709, 711, 713) any CS applications associated with the user device; and
reclaiming any CS resources associated with the user device.

9. The method of any one of claims 1 to 8, further comprising:
receiving, from an authorized user device, an update for a service level agreement, SLA, -User mapping table associated with another user device that the authorized user device is identifying the attacker; and
designating the another user device as the attacker in the SLA-User mapping table associated with the another user device, based on the update.

10. A computational storage device (104), CSD (104), comprising:
a memory (105, 1030, 1032, 1034, 1036, 1038); and
a processor (1020, 1021, 1023) configured to perform the method according to any one of claims 1 to 9.

## Patentansprüche

1. Ein Verfahren für eine rechnergestützte Speichervorrichtung (104), CSD (104), wobei das Verfahren umfasst:
Empfangen (501) einer Anforderung für einen rechnergestützten Speicher, CS, von einer Benutzervorrichtung;
Identifizieren (503, 505, 509) der CS-Anforderung als Angriff durch Ausführen einer CS-Ressourcenautorisierung, bei der die CSD (104) bestimmt, ob eine angeforderte CS-Ressource Eigentum der zur Benutzervorrichtung gehörenden CS-Anwendung ist;
Vergleichen (511) eines Gesamtangriffswerts der Benutzervorrichtung mit einem Schwellenwert, wobei der Gesamtangriffswert auf einer Anzahl von Angriffen basiert, welche von der Benutzervorrichtung empfangen wurden; und
Identifizieren (513) der Benutzervorrichtung als Angreifer auf der Grundlage des Vergleichs.

2. Das Verfahren nach Anspruch 1, wobei das Identifizieren der CS-Anforderung als Angriff das Verifizieren (505) umfasst, dass eine angeforderte CS-Ressource für die Verwendung durch eine CS-Anwendung gültig ist.

3. Das Verfahren nach Anspruch 1 oder 2, ferner umfassend das Protokollieren des identifizierten Angriffs in einer Benutzerdatenstruktur, welche mit dem Gesamtangriffswert assoziiert ist.

4. Das Verfahren nach einem der Ansprüche 1 bis 3, wobei das Identifizieren der Benutzervorrichtung als Angreifer auf der Grundlage des Vergleichs das Identifizieren (513) der Benutzervorrichtung als Angreifer umfasst, wenn der Gesamtangriffswert der Benutzervorrichtung größer oder gleich dem Schwellenwert (511) ist.

5. Das Verfahren nach einem der Ansprüche 1 bis 4, ferner umfassend das Festlegen der Benutzervorrichtung als Angreifer in einer Dienstgütevereinbarung, SLA, und einer der Benutzervorrichtung zugeordneten Benutzerzuordnungstabelle.

6. Das Verfahren nach Anspruch 5, ferner umfassend:
Empfangen (701) einer Anfrage zum Starten einer Sitzung von der Benutzervorrichtung, wobei die Anfrage eine Benutzerkennung, UID, der Benutzervorrichtung enthält;
Vergleichen (703) der UID der Benutzervorrichtung mit der der Benutzervorrichtung zugeordneten SLA-Benutzer-Zuordnungstabelle;
Identifizieren (705) der Benutzervorrichtung als Angreifer auf der Grundlage der Bezeichnung in der der Benutzervorrichtung zugeordneten SLA-Benutzer-Zuordnungstabelle; und
Ändern (709) des Zugriffs für der Benutzervorrichtung als Reaktion auf die Identifizierung der Benutzervorrichtung als Angreifer.

7. Das Verfahren nach Anspruch 6, ferner umfassend:
Empfangen (711) einer weiteren CS-Anforderung von der blockierten Benutzervorrichtung; und
Ändern (712) des Zugriffs für die weitere CS-Anforderung und Zurückgeben einer Anzeige.

8. Das Verfahren nach einem der Ansprüche 1 bis 7, ferner umfassend:
als Reaktion auf die Identifizierung der Benutzervorrichtung als Angreifer das Anhalten (709, 711, 713) aller mit der Benutzervorrichtung verbundenen CS-Anwendungen; und
das Zurückfordern aller mit der Benutzervorrichtung verbundenen CS-Ressourcen.

9. Das Verfahren nach einem der Ansprüche 1 bis 8, ferner umfassend:
Empfangen einer Aktualisierung für eine Dienstgütevereinbarung, SLA, -Benutzer- Zuordnungstabelle von einer autorisierten Benutzervorrichtung, welche mit einer anderen Benutzervorrichtung assoziiert ist, dass die autorisierte Benutzervorrichtung den Angreifer identifiziert; und
Bezeichnen der anderen Benutzervorrichtung als Angreifer in der SLA-Benutzer-Zuordnungstabelle, welche mit der anderen Benutzervorrichtung assoziiert ist, basierend auf der Aktualisierung.

10. Eine rechnergestützte Speichervorrichtung (104), CSD (104), umfassend:
einen Speicher (105, 1030, 1032, 1034, 1036, 1038); und
einen Prozessor (1020, 1021, 1023), welcher derart konfiguriert ist, dass er das Verfahren gemäß einem der Ansprüche 1 bis 9 ausführt.

## Revendications

1. Procédé d'un dispositif de stockage computationnel (104), le procédé comprenant :
recevoir (501), d'un dispositif utilisateur, une requête de stockage computationnel;
identifier (503, 505, 509) la requête de stockage computationnel comme une attaque en effectuant une autorisation de ressource de stockage computationnel dans laquelle le dispositif de stockage computationnel (104) détermine si une ressource de stockage computationnel qui est demandée est la propriété de l'application de stockage computationnel appartenant au dispositif utilisateur ;
comparer (511) une valeur totale d'attaque du dispositif utilisateur à un seuil, dans lequel la valeur totale d'attaque est basée sur un nombre d'attaques reçues du dispositif utilisateur ; et
identifier (513) le dispositif utilisateur comme un attaquant sur la base de la comparaison.

2. Procédé selon la revendication 1, dans lequel l'identification de la requête de stockage computationnel comme l'attaque comprend la vérification (505) qu'une ressource de stockage computationnel qui est demandée est valide pour une utilisation par une application de stockage computationnel.

3. Procédé selon la revendication 1 ou 2, comprenant en outre la journalisation de l'attaque identifiée dans une structure de données utilisateur associée à la valeur totale d'attaque.

4. Procédé selon l'une quelconque des revendications 1 à 3, dans lequel l'identification du dispositif utilisateur comme l'attaquant sur la base de la comparaison comprend : identifier (513) le dispositif utilisateur comme l'attaquant, en réponse au fait que la valeur totale d'attaque du dispositif utilisateur est supérieure ou égale au seuil (511).

5. Procédé selon l'une quelconque des revendications 1 à 4, comprenant en outre : désigner le dispositif utilisateur comme l'attaquant dans une table de correspondance accord de niveau de service utilisateur associée au dispositif utilisateur.

6. Procédé selon la revendication 5, comprenant en outre :
recevoir (701) une requête de démarrer une session, du dispositif utilisateur, la requête comprenant un identifiant d'utilisateur du dispositif utilisateur ;
comparer (703) l'identifiant d'utilisateur du dispositif utilisateur à la table de correspondance accord de niveau de service utilisateur associée au dispositif utilisateur ;
identifier (705) le dispositif utilisateur comme l'attaquant sur la base de la désignation dans la table de correspondance accord de niveau de service-utilisateur associée au dispositif utilisateur ; et
modifier (709) l'accès pour le dispositif utilisateur, en réponse à l'identification du dispositif utilisateur comme l'attaquant.

7. Procédé selon la revendication 6, comprenant en outre :
recevoir (711), du dispositif utilisateur bloqué, une autre requête de stockage computationnel ; et
modifier (712) l'accès pour l'autre requête de stockage computationnel et renvoyer une indication.

8. Procédé selon l'une quelconque des revendications 1 à 7, comprenant en outre :
en réponse à l'identification du dispositif utilisateur comme l'attaquant, arrêter (709, 711, 713) toute application de stockage computationnel associée au dispositif utilisateur ; et
récupérer toute ressource de stockage computationnel associée au dispositif utilisateur.

9. Procédé selon l'une quelconque des revendications 1 à 8, comprenant en outre :
recevoir, d'un dispositif utilisateur autorisé, une mise à jour pour une table de correspondance accord de niveau de service utilisateur associée à un autre dispositif utilisateur que le dispositif utilisateur autorisé identifie l'attaquant ; et
désigner l'autre dispositif utilisateur comme l'attaquant dans la table de correspondance accord de niveau de service-utilisateur associée à l'autre dispositif utilisateur, sur la base de la mise à jour.

10. Dispositif de stockage computationnel (104), comprenant :
une mémoire (105, 1030, 1032, 1034, 1036, 1038) ; et
un processeur (1020, 1021, 1023) configuré pour exécuter le procédé selon l'une quelconque des revendications 1 à 9.
